# EUROPÄISCHE PATENTSCHRIFT

(11) **EP 2 366 923 B1**
(45) Veröffentlichungstag und Bekanntmachung des Hinweises auf die Patenterteilung: **10.06.2015**
(21) Anmeldenummer: 11002192.0
(22) Anmeldetag: 16.03.2011
(51) Int. Cl.: F16K 11/20, F16K 7/14, F16K 11/02, F16K 27/02

(54) **Ventilbaugruppe**
Valve assembly
Bloc de soupape

(30) Priorität: 16.03.2010 DE 202010003667 U
(43) Veröffentlichungstag der Anmeldung: 21.09.2011
(73) Patentinhaber: Bürkert Werke GmbH, 74653 Ingelfingen (DE)
(72) Erfinder: Equit, Alexander, 10318 Berlin (DE); Kettemann, Ralf, 74632 Neuenstein-Kirchensall (DE)
(74) Vertreter: Prinz & Partner mbB

(56) Entgegenhaltungen:
- EP-B1- 0 972 148
- WO-A1-97/17558
- WO-A1-99/13251
- DE-U1-202004 007 628
- US-A- 5 706 859
- US-B1- 6 237 637

## Beschreibung

Die Erfindung betrifft eine Ventilbaugruppe mit einem Ventilknoten, der ein Gehäuse mit einer zentralen Mischkammer und einer Mantelfläche aufweist mit zumindest zwei Membranventilen, die jeweils an einem auf der Mantelfläche vorgesehenen Ventilanschluss befestigbar sind.

Solche Ventilbaugruppen werden verwendet, um verschiedene Flüssigkeiten oder Gase zu mischen. Der Ventilknoten hat mehrere Zuflüsse, durch die verschiedene Flüssigkeiten oder Gase zugeführt werden können, sowie einen oder mehrere Abflüsse, durch die die Flüssigkeiten oder Gase aus dem Ventilknoten abgelassen werden können. Die Steuerung der Zuflüsse in die zentrale Mischkammer bzw. der Abflüsse aus der zentralen Mischkammer erfolgt durch Membranventile, die die Zuflüsse bzw. die Abflüsse zur zentralen Mischkammer sperren können.

Aus der EP 0 972 148 B1 ist beispielsweise ein Membranventil bekannt, das zwei Zuflüsse und zwei Abflüsse zu einer zentralen Kammer einzeln sperren bzw. öffnen kann, sodass zwei Zuflüsse bzw. Abflüsse mit einem gemeinsamen Ventil gesteuert werden können. Nachteilig an dieser Konstruktion ist, dass die zentrale Mischkammer bzw. die Zuflüsse und Abflüsse nur schwer erreichbar sind, sodass Wartungs- und Reinigungsarbeiten sehr aufwendig sind. Vor allem beim Einsatz im Lebensmittelbereich und bei Arbeiten in keimfreien bzw. sterilen Umgebungen ist eine einfache und schnelle Reinigung einer Ventilbaugruppe erforderlich.

Aufgabe der Erfindung ist es, eine Ventilbaugruppe bereitzustellen, die eine einfachere Reinigung und Wartung des Ventilknotens ermöglicht.

Zur Lösung der Aufgabe ist eine Ventilbaugruppe vorgesehen, mit einem Ventilknoten, der ein Gehäuse mit einer zentralen Mischkammer und einer Mantelfläche aufweist, und mit zumindest zwei Membranventilen, die jeweils an einem auf der Mantelfläche vorgesehenen Ventilanschluss befestigbar sind, wobei ein erster Ventilanschluss drei Öffnungen aufweist, und die weiteren Ventilanschlüsse zumindest zwei Öffnungen aufweisen. Jeweils eine erste Öffnung der Ventilanschlüsse ist strömungstechnisch direkt mit der zentralen Mischkammer verbunden, und die zweite bzw. dritte Öffnung der Ventilanschlüsse ist jeweils strömungstechnisch über einen Kanal mit einem Zu- oder Abfluss verbunden. Jedes Ventil weist mit den Öffnungen der mit den Öffnungen der Ventilanschlüsse korrespondierende Ein- oder Auslässe auf, die jeweils strömungstechnisch mit einer Öffnung verbunden sind, und kann den Strömungsweg zwischen der ersten Öffnung eines Ventilanschlusses und der zweiten bzw. dritten Öffnung sperren bzw. öffnen. Erfindungsgemäß weisen die Kanäle sowie der Boden der zentralem Mischkammer ein konstantes oder ein zum jeweiligen Ventilanschluss konstant zunehmendes Gefälle ohne Senken, in denen sich Flüssigkeitsreste sammeln können, aufweisen, so dass der Ventilknoten bei vollständiger Öffnung der Ventile selbstentleerend ist. Die Ventile sind hier nicht in den Ventilknoten integriert, sondern werden außen am Ventilknoten angebracht, so dass diese einfach ausgetauscht bzw. zu Wartungszwecken demontiert werden können. Die Flüssigkeiten oder Gase werden durch die Zuflüsse in den Knoten an die jeweiligen Öffnungen der Ventilanschlüsse geleitet und gelangen von dort über das jeweilige Ventil und die erste Öffnung des Ventilanschlusses in die Mischkammer. Da die Ventile außen am Ventilknoten angeordnet sind und nicht im Ventilknoten integriert sind, können diese einfach demontiert und ausgetauscht werden. Bei demontiertem Ventil ist zudem eine einfache Reinigung der Ventilkammer bzw. der an den jeweiligen Ventilanschluss angrenzenden Kanäle möglich, da diese direkt von dem Ventilanschluss erreichbar sind. Durch die selbstleerende Funktion erfolgt beim Öffnen der Ventile eine vollständige Entleerung des Ventilknotens. Bei einem Riboflavintest konnten nach einem Reinigungsprozess keine Flüssigkeitsrückstände im Ventilknoten nachgewiesen werden.

Vorzugsweise weisen der zweite Ventilanschluss sowie die weiteren Ventilanschlüsse drei Öffnungen auf, so dass mit jedem Ventil zwei Zu- oder Abflüsse gesperrt oder geöffnet werden können. Bei drei Anschlüssen je Ventilanschluss können mehrere Flüssigkeiten oder Gase in der Ventilbaugruppe gemischt werden. Bei zwei Ventilen, die den Zufluss von vier Öffnungen zur zentralen Mischkammer steuern können, ist es beispielsweise möglich, drei Zuflüsse und einen Abfluss zu steuern, sodass mit zwei Ventilen bis zu drei Flüssigkeiten gemischt werden können.

Die Mantelfläche des Ventilknotens weist beispielswiese zumindest zwei Seitenflächen auf, auf denen jeweils ein Ventilanschluss vorgesehen ist. Diese Seitenflächen sind so ausgebildet, dass ein Ventil von außen dichtend an den Ventilknoten angesetzt werden kann.

Die Seitenflächen können gleichmäßig auf dem Umfang der Mantelfläche verteilt angeordnet sein, wodurch die Erreichbarkeit der einzelnen Ventile verbessert ist.

Es ist beispielsweise denkbar, dass zwei Seitenflächen vorgesehen sind, die einander diametral gegenüberliegen.

Die Ventilanschlüsse können in Richtung einer Längsachse des Gehäuses auch versetzt angeordnet sein. Dies ermöglicht zum einen die Herstellung eines kompakteren Ventilknotens, da die Ventile beispielsweise so angeordnet sein können, dass sie sich in Richtung der Längsachse betrachtet gegenseitig überlappen. Die Ventilanschlüsse können aber auch versetzt angeordnet sein, um einen Fließweg durch den Ventilknoten zu optimieren.

In einer bevorzugten Ausführungsform weist der Boden der zentralen Mischkammer gegenüber einer senkrecht zu einer Längsachse des Gehäuses angeordneten Ebene ein Gefälle zu einer ersten Öffnung des ersten Ventilanschlusses hin auf. In eingebautem Zustand ist die Längsachse des Gehäuses im Wesentlichen senkrecht angeordnet, sodass die senkrecht zu der Längsachse angeordnete Ebene waagrecht angeordnet ist. Der Boden der zentralen Mischkammer hat also ein Gefälle relativ zur Horizontalen, sodass in der zentralen Mischkammer vorhandene Flüssigkeit der Schwerkraft folgend aus dieser zum ersten Ventilanschluss abfließt. Die zentrale Mischkammer ist somit selbstentleerend ausgebildet und kann bei geöffnetem Ventil vollständig entleert werden, sodass beispielsweise nach einer Reinigung oder Spülung der zentralen Mischkammer keine Rückstände in dieser zurückbleiben.

Um das weitere Abfließen der Flüssigkeit aus der zentralen Mischkammer bzw. dem Ventilknoten sicherzustellen, ist zumindest eine Öffnung des ersten Ventilanschlusses strömungstechnisch mit einem Abfluss verbunden. Beim Öffnen des entsprechenden Ventils zwischen der mit dem Abfluss verbundenen Öffnung und der zentralen Mischkammer erfolgt eine Selbstentleerung der zentralen Mischkammer, da die Flüssigkeit der Schwerkraft folgend aus der geneigten Mischkammer über den ersten Ventilanschluss zum Abfluss hin abfließen kann. Um das Abfließen aus der zentralen Mischkammer sicherzustellen, ist die mit dem Abfluss verbundene Öffnung des ersten Ventilanschlusses tiefer angeordnet als der tiefste Punkt der Mischkammer.

Die mit einem Abfluss strömungstechnisch in Verbindung stehenden Kanäle weisen gegenüber einer senkrecht zu einer Längsachse des Gehäuses angeordneten Ebene ein Gefälle von dem jeweiligen Ventilanschluss zum Abfluss hin auf. Dadurch ist sichergestellt, dass eine Flüssigkeit aus dem Ventil durch die jeweilige Öffnung zum Abfluss hin abfließen kann.

In einer bevorzugten Ausführungsform weisen die mit einem Zufluss strömungstechnisch in Verbindung stehenden Kanäle gegenüber einer senkrecht zu einer Längsachse des Gehäuses angeordneten Ebene ein Gefälle vom Zufluss zur jeweiligen Öffnung des Ventilanschlusses auf. Bei geöffneten Ventilen ergibt sich so für den gesamten Ventilknoten eine selbstreinigende Funktion, da eine Flüssigkeit selbstständig aus dem Ventilknoten abfließen kann. Flüssigkeiten werden über die geneigten Zuflüsse durch die Ventile zur zentralen Mischkammer geleitet und von der geneigten Mischkammer über die Ventile zum Abfluss. Bei geöffneten Ventilen bleiben somit keine Rückstände einer Flüssigkeit im Ventilknoten zurück.

Es ist beispielsweise auch denkbar, dass am Ventilknoten ein Außenanschluss vorgesehen ist, der direkt strömungstechnisch über einen Kanal mit der Mischkammer verbunden ist. Zum Reinigen der Mischkammer bzw. zum Einbringen eines Spülmediums ist es bisher erforderlich, einen der Anschlüsse vom Ventilknoten zu entfernen. Die Zuführung des Spülmediums erfolgt über einen Anschluss und ein Ventil in die Mischkammer. Im Zufluss bzw. im Ventil enthaltene Flüssigkeitsrückstände gehen verloren bzw. müssen zusätzlich ausgespült werden. Nach dem Reinigen und Anschließen der Anschlüsse ist eine erneute Befüllung der Toträume bzw. der Ventile notwendig. Durch den Außenanschluss kann ein Spülmedium direkt in die Mischkammer eingebracht werden, wodurch nur die Mischkammer sowie ein mit der Mischkammer verbundener Abfluss vollständig gereinigt werden können, so dass bei einem weiteren Mischvorgang in der Mischkammer keine Rückstände des vorherigen Mischvorgangs in das Mischgut gelangen können. Die übrigen Kanäle sowie die Ventile müssen nicht gespült werden, sodass darin enthaltene Flüssigkeiten nicht unnötig entsorgt werden müssen bzw. verloren gehen.

Die Öffnungen eines Ventilanschlusses können in Richtung der Längsachse hintereinander angeordnet sein, das heißt die Öffnungen sind in montiertem Zustand des Ventilknotens übereinander. Dadurch ist eine schwerkraftbedingte Strömung der Flüssigkeiten zwischen den einzelnen Öffnungen eines Ventilanschlusses sichergestellt.

Es ist aber auch denkbar, dass die Öffnungen eines Ventilanschlusses in Richtung der Längsachse nebeneinander angeordnet sind, das heißt die Öffnungen sind in montiertem Zustand horizontal nebeneinander.

Weitere Vorteile und Merkmale ergeben sich aus der nachfolgenden Beschreibung in Verbindung mit den beigefügten Zeichnungen. In diesen zeigen:
- Figur 1 eine erste Ausführungsform eines Ventilknotens für eine erfindungsgemäße Baugruppe,
- Figur 2 eine vertikale Schnittansicht durch den Ventilknoten aus Figur 1,
- Figur 3 eine zweite Ausführungsform eines Ventilknotens für eine erfindungsgemäße Ventilbaugruppe,
- Figur 4 eine vertikale Schnittansicht durch den Ventilknoten aus Figur 3,
- Figur 5 eine dritte Ausführungsform eines Ventilknotens,
- Figur 6 eine zweite Ansicht des Ventilknotens aus Figur 5,
- Figur 7 eine Teilschnittansicht des Ventilknotens aus Figur 5,
- Figur 8 eine zweite Teilschnittansicht des Ventilknotens aus Figur 5,
- Figur 9 eine Komplettansicht des Ventilknotens aus Figur 5, und
- Figur 10 eine erfindungsgemäße Ventilbaugruppe mit dem Ventilknoten aus Figur 5.

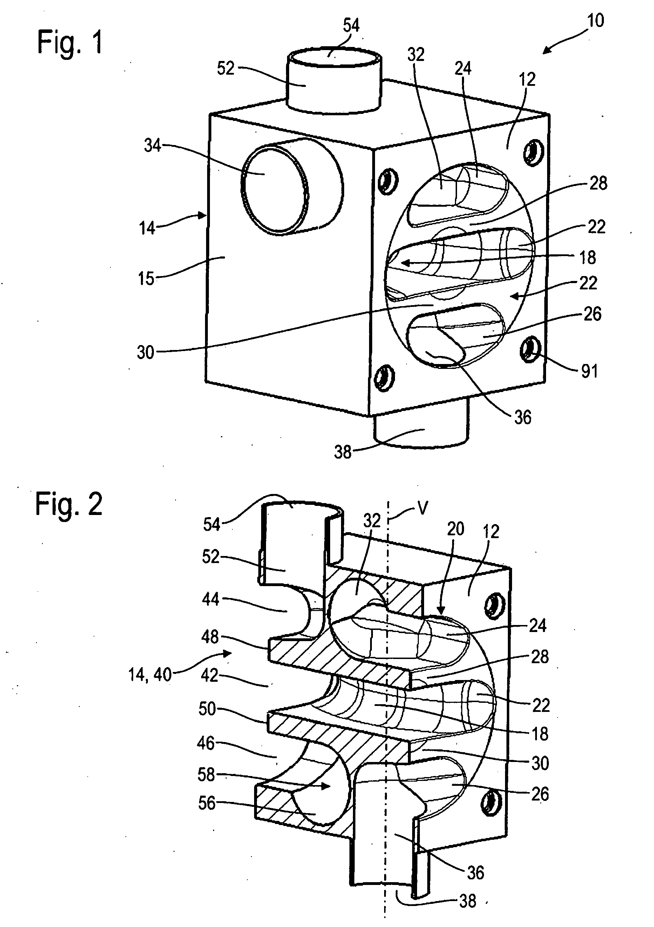

Die in Figur 1 gezeigte erste Ausführungsform eines Ventilknotens 10 hat eine zentrale Mischkammer zum Vermischen verschiedener Flüssigkeiten oder Gase sowie zwei Seitenflächen 12, 14 die hier einander diametral gegenüberliegend auf der Mantelfläche 15 des Ventilknotens 10 angeordnet sind.

An der ersten Seitenfläche 12 ist ein erster Ventilanschluss 20 vorgesehen, der drei Öffnungen 22, 24, 26 aufweist, die jeweils durch Stege 28, 30 voneinander getrennt sind. Die erste Öffnung 22 ist strömungstechnisch direkt mit der zentralen Mischkammer 18 verbunden. Die zweite Öffnung 24 ist über einen Kanal 32 mit einem Zufluss 34 verbunden. Die dritte Öffnung 26 ist über einen Kanal 36 mit einem Abfluss 38 verbunden.

Als Zuflüsse werden hier Anschlüsse bezeichnet, die in eingebautem Zustand des Ventilknotens 10 strömungstechnisch vor der zentralen Mischkammer 18 angeordnet sind, also in eingebautem Zustand des Ventilknotens, bezogen auf eine vertikale Längsachse V, oberhalb des zentralen Mischkammer 18 angeordnet sind. Abflüsse sind dementsprechend Anschlüsse, die strömungstechnisch nach der zentralen Mischkammer 18 angeordnet sind, also in eingebautem Zustand, bezogen auf die vertikale Längsachse V, unterhalb der zentralen Mischkammer 18 liegen. Es ist aber auch denkbar, eine Flüssigkeit über einen Abfluss, also einen unterhalb der zentralen Mischkammer 18 angeordneten Anschluss, in den Ventilknoten 10 einzubringen.

Analog zur ersten Seitenfläche 12 ist an der zweiten Seitenfläche 14 ein zweiter Ventilanschluss 40 vorgesehen, der eine erste Öffnung 42, eine zweite Öffnung 44, sowie eine dritte Öffnung 46 aufweist, die jeweils durch Stege 48, 50 voneinander getrennt sind. Die erste Öffnung 42 ist auch hier strömungstechnisch direkt mit der zentralen Mischkammer 18 verbunden. Die zweite Öffnung 44 ist über einen Kanal 52 mit einem Zufluss 54 verbunden. Die dritte Öffnung 46 ist strömungstechnisch über einen Kanal 56 mit einem Abfluss 58 verbunden.

An jeder Seitenfläche 12, 14 sind Befestigungsvorrichtungen 91, hier Bohrungen vorgesehen, um ein Membranventil am jeweiligen Ventilanschluss 20, 40 zu befestigen. Die Funktion des Membranventils wird im Folgenden anhand des ersten Ventilanschlusses 20 erläutert:
Das Membranventil hat eine Membran, die durch eine Steuerung sowohl gegen den ersten Steg 28 als auch gegen den zweiten Steg 30 gedrückt werden kann. Wird die Membran gegen beide Stege 28, 30 gedrückt, sperrt das Membranventil den kompletten Ventilanschluss 20, so dass alle Öffnungen 22, 24, 26 gesperrt sind. Wird die Membran lediglich gegen den ersten Steg 28 gedrückt, sind die erste Öffnung 22 und die dritte Öffnung 26 strömungstechnisch verbunden. Wird die Membran gegen den zweiten Steg 30 gedrückt, ist die erste Öffnung 22 strömungstechnisch mit der zweiten Öffnung 24 verbunden. Liegt die Membran weder am ersten Steg 28 noch am zweiten Steg 30 an, sind alle drei Öffnungen 22, 24, 26 strömungstechnisch miteinander verbunden.

Mit jedem Ventil bzw. jedem Ventilanschluss 20, 40 können somit jeweils zwei Zu- oder Abflüsse 34, 38, 54, 58 gesteuert werden. Bei dem hier gezeigten Ventilknoten können somit vier Abflüsse bzw. Zuflüsse 34, 38, 54, 58 mit lediglich zwei Ventilen gesteuert werden. Da über jeden der Zuflüsse 34, 54 bzw. Abflüsse 38, 58 ein Medium in die zentrale Mischkammer 18 eingeleitet werden kann, ist es möglich (unter der Annahme, dass zumindest ein Abfluss notwendig ist), über drei Zuflüsse eine Flüssigkeit in die zentrale Mischkammer 18 einzubringen. Somit ist mit lediglich zwei Ventilen ein Mischen von bis zu drei Flüssigkeiten möglich.

Zur Reinigung des Ventilknotens 10 wird über einen Zufluss 34, 54 oder einen Abfluss 38, 58 ein Reinigungsmedium in den Ventilknoten eingebracht. Anschließend werden die Ventile geöffnet, um das Reinigungsmedium abfließen zu lassen. Um Verunreinigungen durch das Reinigungsmedium oder ein anderes Medium in der zentralen Mischkammer 18 bzw. im Ventilknoten 10 zu verhindern, dürfen nach dem Reinigungsprozess keine Rückstände des Reinigungsmediums oder eines anderen Mediums im Ventilknoten verbleiben. Dies wird beispielsweise mit einem Riboflavintest nachgewiesen. Bei einem Riboflavintest wird der gesamte Ventilknoten 10 mit einer stark haftenden, fluoreszierenden Flüssigkeit eingesprüht und nach einem Reinigungszyklus auf Rückstände der fluoreszierenden Flüssigkeit untersucht.

Durch geeignetes Schalten der Ventile ist bei dem Ventilknoten gemäß der ersten Ausführungsform eine Kreuzdurchströmung von Zufluss 34 zu Abfluss 58 und anschließend von Zufluss 54 zu Abfluss 38 möglich. Auf diese Weise kann der Innenraum des Ventilknotens vollständig gereinigt werden, was ein großer Vorteil gegenüber dem Stand der Technik ist.

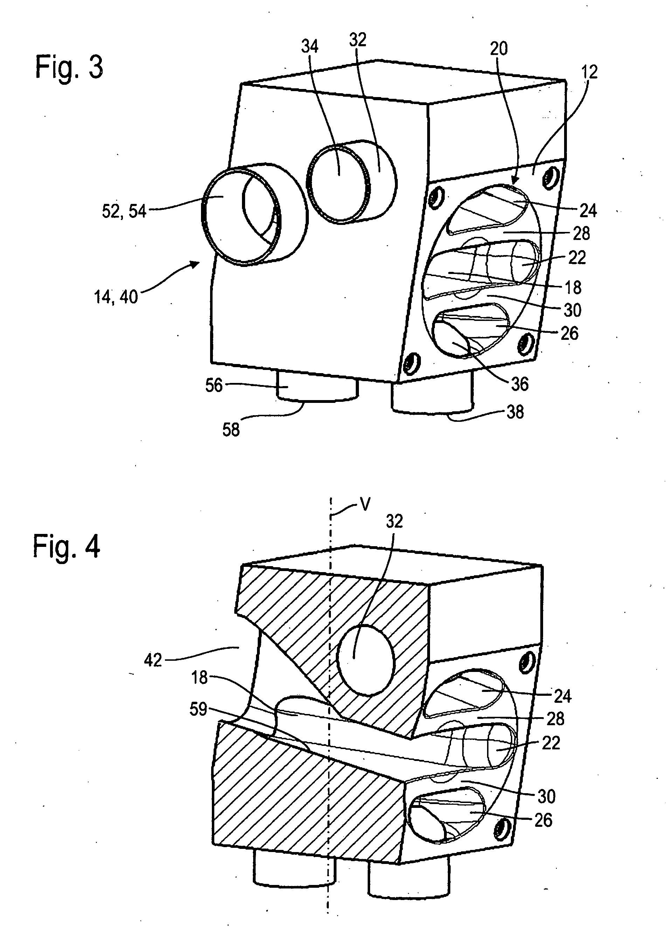

In den Figuren 3 und 4 ist eine zweite Ausführungsform des Ventilknotens 10 gezeigt, der hinsichtlich seines Aufbaus im Wesentlichen dem in den Figuren 1 und 2 gezeigten Ventilknoten entspricht. Abweichend von der ersten Ausführungsform ist der Zufluss 34, der mit der zweiten Öffnungen 24 des ersten Ventilanschlusses verbunden ist, aber an der Mantelfläche 15 des Ventilknotens 10 vorgesehen.

Der Ventilknoten 10 weist hier eine zentrale Mischkammer 18 auf, deren Boden 59 gegenüber einer senkrecht zur vertikalen Längsachse V des Ventilknotens 10 angeordneten Ebene ein Gefälle aufweist. Der Boden 59 der Mischkammer 18 ist zur ersten Öffnung 22 des ersten Ventilanschlusses 20 geneigt, so dass bei geöffneten Ventilen ein Medium aus der zentralen Mischkammer der Schwerkraft folgend zur ersten Öffnung 22 des ersten Ventilanschlusses 20 fließt. Durch das geöffnete Ventil kann das Medium aus der ersten Öffnung 22 in die dritte Öffnung 26 und somit zum Abfluss 38 abfließen. Die zentrale Mischkammer 18 ist somit bei geöffneten Ventilen selbstentleerend, das heißt zur Reinigung bzw. zur vollständigen Entleerung der zentralen Mischkammer 18 sind keine weiteren Arbeitsschritte erforderlich.

Die Kanäle 32, 36, 52, 56 weisen ebenfalls jeweils ein Gefälle zum jeweiligen Ventilanschluss 20, 40 auf. Beim Öffnen der Ventile entleeren sich die Kanäle 32, 52 der Schwerkraft folgend über den jeweiligen Ventilanschluss 20, 40 in die zentrale Mischkammer 18. Die zentrale Mischkammer 18 entleert sich durch das Gefälle des Bodens 59 zur dritten Öffnung 26 des ersten Ventilanschlusses 20 und somit in den Abfluss 38.

Die Kanäle 32, 36, 52, 56 sowie der Boden 59 der zentralen Mischkammer 18 weisen hier ein konstantes oder ein zum jeweiligen Ventilanschluss 20, 40 konstant zunehmendes Gefälle auf, d.h. in den Kanälen 32, 36, 52, 56 und die zentrale Mischkammer 18 weisen keine Senken auf, in denen sich Flüssigkeitsreste sammeln können.

Somit ist der Ventilknoten 10 bei vollständiger Öffnung der Ventile selbstentleerend, das heißt beim Öffnen der Ventile erfolgt eine vollständige Entleerung des Ventilknotens 10. Bei einem Riboflavintest konnten nach einem Reinigungsprozess keine Flüssigkeitsrückstände im Ventilknoten 10 nachgewiesen werden.

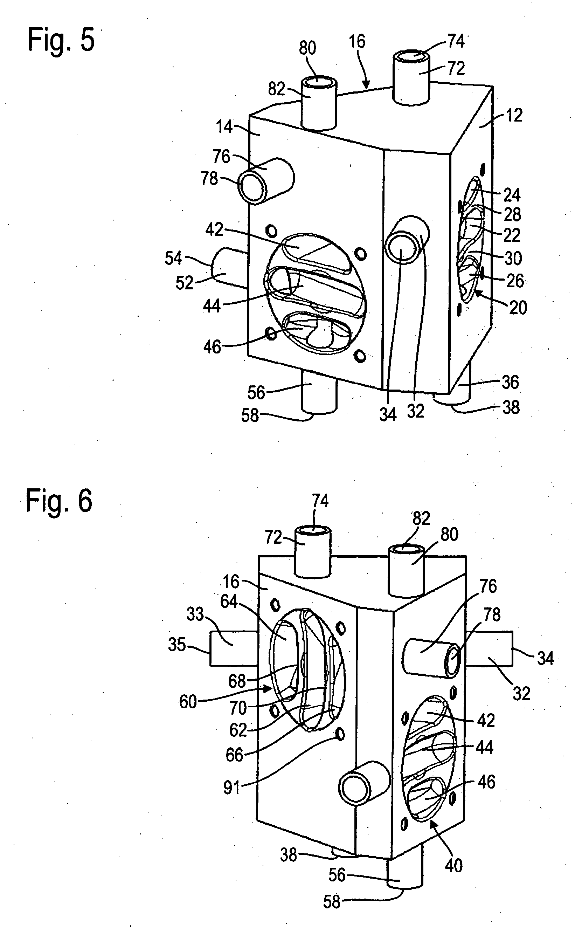

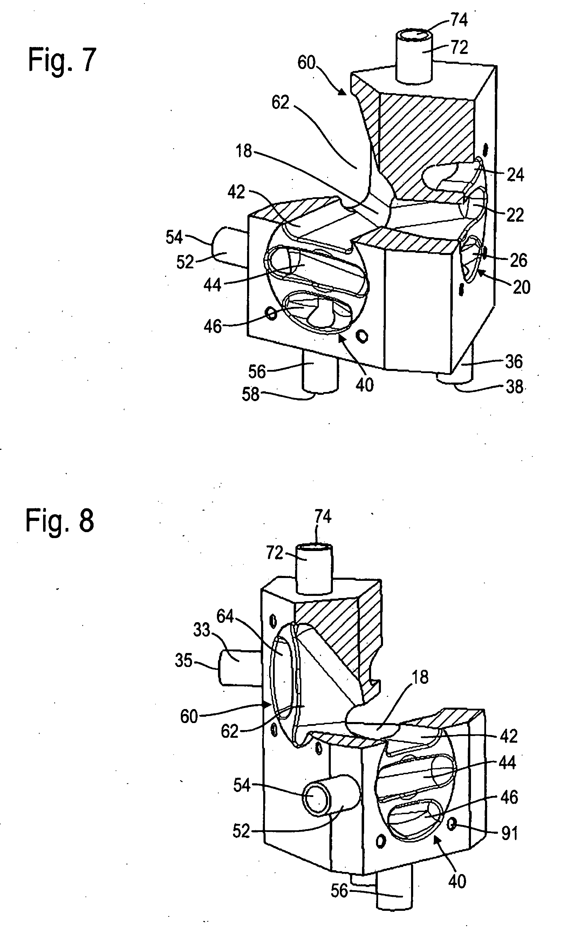

In den Figuren 5 bis 9 ist eine dritte Ausführungsform eines Ventilknotens 10 mit einer zentralen Mischkammer 18 gezeigt. Der hier gezeigte Ventilknoten 10 hat drei Seitenflächen 12, 14, 16, an denen jeweils ein Ventilanschluss 20, 40, 60 angeordnet ist.

Der Aufbau des ersten Ventilanschlusses 20 entspricht im wesentlichen dem des in den Figuren 3 und 4 dargestellten ersten Ventilanschlusses 20. Der Ventilanschluss weist drei Öffnungen 22, 24, 26 auf, die durch Stege 28, 30 voneinander getrennt sind. Die erste Öffnung 22 ist strömungstechnisch mit der zentralen Mischkammer 18 verbunden. Die zweite Öffnung 24 ist über einen Kanal 32 mit einem Zufluss 34 verbunden, und die dritte Öffnung 26 ist über einen Kanal 36 strömungstechnisch mit einem Abfluss 38 verbunden. Wie insbesondere in Figur 6 zu sehen ist, ist die zweite Öffnung 24 über einen zusätzlichen Kanal 33 mit einem weiteren Zufluss 35 verbunden.

Der zweite Ventilanschluss 40 ist hier gegenüber dem ersten Ventilanschluss 20 vertikal versetzt, das heißt er befindet sich unterhalb des ersten Ventilanschlusses 20. Abweichend von dem in Figur 3 und 4 dargestellten Ausführungsbeispiel ist hier die erste Öffnung 42, die mit der zentralen Mischkammer 18 verbunden ist, in vertikaler Richtung über der zweiten und dritten Öffnung 44, 46 angeordnet. Die zweite Öffnung 44 ist auch hier über einen Kanal 52 mit einem Zufluss 54 verbunden, wobei der Zufluss 54 an der Mantelfläche 15 vorgesehen ist. Die dritte Öffnung 46 ist über einen Kanal 56 mit einem Abfluss 58 verbunden.

Wie insbesondere in Figur 6 zu sehen ist, hat der dritte Ventilanschluss 60 ebenfalls drei Öffnungen 62, 64, 66, die hier im Gegensatz zum ersten Ventilanschluss 20 und zweiten Ventilanschluss 40 nebeneinander angeordnet sind, das heißt die Stege zwischen den Öffnungen 62, 64, 66 verlaufen in Richtung der vertikalen Längsachse V. Die erste Öffnung 62 ist auch hier strömungstechnisch mit der zentralen Mischkammer 18 verbunden. Die zweite Öffnung 64 sowie die dritte Öffnung 64 sind jeweils über einen Kanal 72, 76 mit einem Zufluss 74, 78 verbunden.

Der hier gezeigte Ventilknoten 10 hat also insgesamt sechs bzw. sieben Anschlüsse, die mit drei Ventilen gesteuert werden können. Somit können mit drei Ventilen, ein Abfluss für die gemischte Flüssigkeit vorausgesetzt, über fünf bzw. sechs Anschlüsse verschiedene Flüssigkeiten in die zentrale Mischkammer 18 eingeleitet und gemischt werden.

Der Vorteil der dritten Ausführungsform gemäß den Figuren 5 bis 9 gegenüber der zweiten Ausführungsform gemäß den Figuren 3 und 4 liegt darin, dass sie leichter gereinigt werden kann.

Bei dem in den Figuren 3 und 4 dargestellten Ventilknoten 10 ist zur Reinigung der Mischkammer 18 zum einen das Entfernen eines Anschlusses notwendig, um das Reinigungsmedium in den Ventilknoten einbringen zu können. Zum anderen ist eine vollständige Entleerung des Ventilknotens, also auch der Ventile und aller Abflüsse und Zuflüsse notwendig.

Üblicherweise ist es aber nur notwendig, die zentrale Mischkammer 18 zu spülen, um bei einem erneuten Mischvorgang Verunreinigungen durch Rückstände des vorherigen Mischvorgangs zu vermeiden

Der in den Figuren 5 bis 9 gezeigte Ventilknoten 10 hat zusätzlich auf der Oberseite einen Außenanschluss 80. Dieser Außenanschluss 80 ist über einen Kanal 82 direkt strömungstechnisch mit der Mischkammer 18 verbunden. Über diesen Außenanschluss kann ein Reinigungsmedium direkt in die zentrale Mischkammer 18 eingebracht werden. Zum Spülen der Mischkammer 18 ist lediglich das Öffnen eines mit der Mischkammer verbundenen Abflusses, vorzugsweise des in vertikaler Richtung niedrigsten Abflusses, erforderlich.

Zum einen ist so keine vollständige Entleerung der Kanäle des Ventilknotens 10 notwendig, sodass eine erhebliche Flüssigkeitseinsparung erzielt werden kann. Zum anderen kann die Reinigung wesentlich schneller und unkomplizierter erfolgen, da kein anderer Anschluss entfernt werden muss, um die Spülflüssigkeit in die Mischkammer 18 einzubringen. Zum Spülen der Mischkammer 18 ist es lediglich erforderlich, am ersten Ventilanschluss 20 die Verbindung zwischen der ersten Öffnung 22 und der dritten Öffnung 26 zu öffnen, sodass das Reinigungsmedium aus der zentralen Mischkammer 18 in den Abfluss 38 strömen kann.

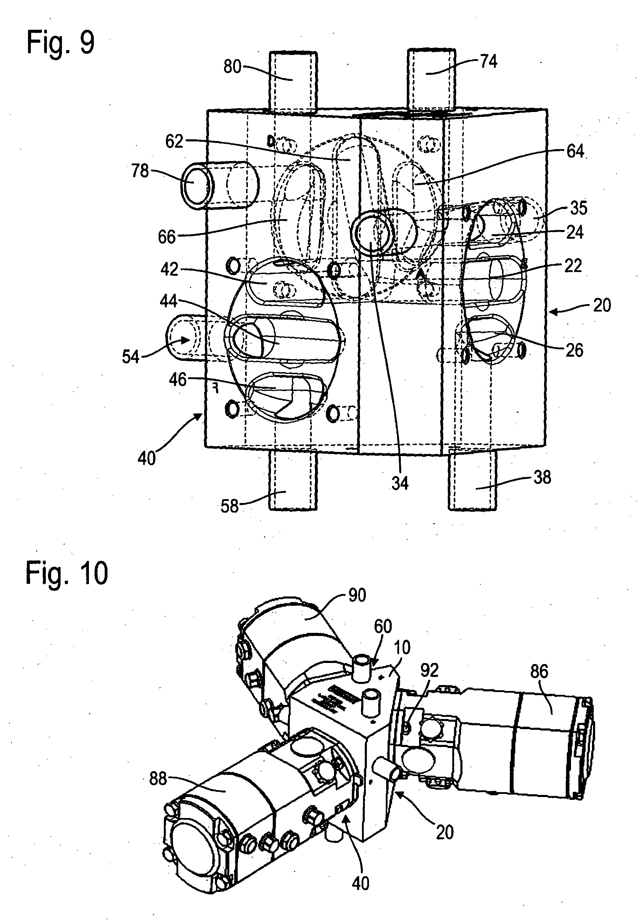

In Figur 10 ist eine Ventilbaugruppe 84 mit einem erfindungsgemäßen Ventilknoten 10 gezeigt. An jedem Ventilanschluss 20, 40, 60 ist hier ein Membranventil 86, 88, 90 befestigt. Die Membranventile 86, 88, 90 sind jeweils mit geeigneten Befestigungsmitteln, hier Schrauben 92, an den Befestigungsvorrichtungen 91 an den Seitenflächen 12, 14, 16 befestigt. Die Seitenflächen 12, 14, 16 sind hier gleichmäßig auf dem Umfang der Mantelfläche verteilt angeordnet, sodass um die Ventile 86, 88, 90 bzw. die Seitenflächen 12, 14, 16 ein möglichst großer Raum zur Montage, Wartung und/oder Demontage der Ventile 86, 88, 90 geschaffen ist. Davon abweichend ist aber auch eine beliebige andere Anordnung der Ventilanschlüsse 20, 40 60 denkbar. Der Ventilknoten 10 kann abweichend von den hier dargestellten Ausführungsbeispielen auch mehr als drei Seitenflächen 12, 14, 16 aufweisen.

## Patentansprüche

1. Ventilbaugruppe (84)
mit einem Ventilknoten (10), der ein Gehäuse mit einer zentrale Mischkammer (18) und einer Mantelfläche (15) aufweist,
und mit zumindest zwei Membranventilen (86, 88, 90), die jeweils an einem auf der Mantelfläche (15) vorgesehenen Ventilanschluss (20, 40, 60) befestigbar sind,
wobei ein erster Ventilanschluss (20) drei Öffnungen (22, 24, 26) aufweist,
und die weiteren Ventilanschlüsse (40, 60) zumindest zwei Öffnungen (42, 44, 46, 62, 64, 66) aufweisen,
wobei jeweils eine erste Öffnung (22, 42, 62) der Ventilanschlüsse (20, 40, 60) strömungstechnisch direkt mit der zentralen Mischkammer (18) verbunden ist und die zweite und dritte Öffnung (24, 26, 44, 46, 64, 66) der Ventilanschlüsse (20, 40, 60) jeweils strömungstechnisch über einen Kanal (32, 36, 52, 56, 72, 76) mit einem Zu- oder Abfluss (34, 38, 54, 58, 74, 78) verbunden ist,
wobei jedes Ventil (86, 88, 90) mit den Öffnungen (22, 24, 26, 42, 44, 46, 62, 64, 66) der Ventilanschlüsse (20, 40, 60) korrespondierende Ein- oder Auslässe aufweist, die jeweils strömungstechnisch mit einer Öffnung (22, 24, 26, 42, 44, 46, 62, 64, 66) verbunden sind,
wobei jedes Ventil (86, 88, 90) den Strömungsweg zwischen der ersten Öffnung (22, 42, 62) eines Ventilanschlusses (20, 40, 60) und der zweiten bzw. dritten Öffnung (24, 26, 44, 46, 64, 66) sperren bzw. öffnen kann,
**dadurch gekennzeichnet, dass** die Kanäle (32, 36, 52, 56) sowie der Boden (59) der zentralem Mischkammer (18) ein konstantes oder ein zum jeweiligen Ventilanschluss (20, 40) konstant zunehmendes Gefälle ohne Senken, in denen sich Flüssigkeitsreste sammeln können, aufweisen, so dass der Ventilknoten bei vollständiger Öffnung der Ventile (86, 88, 90) selbstentleerend ist.

2. Ventilbaugruppe nach Anspruch 1, **dadurch gekennzeichnet, dass** der zweite Ventilanschluss (40) und/oder der dritte Ventilanschluss (60) drei Öffnungen (24, 26, 44, 46, 64, 66) aufweisen.

3. Ventilbaugruppe nach Anspruch 1 oder 2, **dadurch gekennzeichnet, dass** die Mantelfläche (15) des Ventilknotens (10) zumindest zwei Seitenflächen (12, 14, 16) aufweist, auf denen jeweils eine Ventilanschluss vorgesehen ist.

4. Ventilbaugruppe nach einem der vorhergehenden Ansprüche, **dadurch gekennzeichnet, dass** die Seitenflächen (12, 14, 16) gleichmäßig auf dem Umfang der Mantelfläche (15) verteilt angeordnet sind.

5. Ventilbaugruppe nach einem der vorhergehenden Ansprüche, **dadurch gekennzeichnet, dass** zwei Seitenflächen (12, 14) vorgesehen sind, die sich in Umfangsrichtung gegenüberliegen.

6. Ventilbaugruppe nach einem der vorhergehenden Ansprüche, **dadurch gekennzeichnet, dass** die Ventilanschlüsse (20, 40, 60) in Richtung einer Längsachse (V) des Gehäuses versetzt angeordnet sind.

7. Ventilbaugruppe nach Anspruüche 6, **dadurch gekennzeichnet, dass** der Boden (59) der zentralen Mischkammer (18) gegenüber einer senkrecht zu einer Längsachse (V) des Gehäuses angeordneten Ebene ein Gefälle zu einer ersten Öffnung eines ersten Ventilanschlusses hin aufweist.

8. Ventilbaugruppe nach einem der vorhergehenden Ansprüche, **dadurch gekennzeichnet, dass** zumindest eine Öffnung des ersten Ventilanschlusses strömungstechnisch mit einem Abfluss verbunden ist.

9. Ventilbaugruppe nach Anspruch 8, **dadurch gekennzeichnet, dass** die mit dem Abfluss (38) verbundene Öffnung (26) des ersten Ventilanschlusses (20) auf dem Ventilanschluss (20) tiefer angeordnet ist als der tiefste Punkt der Mischkammer (18).

10. Ventilbaugruppe nach einem der vorhergehenden Ansprüche, **dadurch gekennzeichnet, dass** die mit einem Abfluss (38, 58, 78) strömungstechnisch in Verbindung stehenden Kanäle (36, 56, 76) gegenüber einer senkrecht zu einer Längsachse (V) des Gehäuses angeordneten Ebene ein Gefälle vom jeweiligen Ventilanschluss (20, 40, 60) zum Abfluss (38, 58, 78) aufweisen.

11. Ventilbaugruppe nach einem der vorhergehenden Ansprüche, **dadurch gekennzeichnet, dass** die mit einem Zufluss (34, 54, 74) strömungstechnisch in Verbindung stehenden Kanäle (32, 52, 72) gegenüber einer senkrecht zu einer Längsachse (V) des Gehäuses angeordneten Ebene ein Gefälle vom Zufluss (34, 54, 74) zur jeweiligen Öffnung (24, 44, 64) der Ventilabschlüsse (20, 40, 60) aufweisen.

12. Ventilbaugruppe nach einem der vorhergehenden Ansprüche, **dadurch gekennzeichnet, dass** ein Außenanschluss (80) vorgesehen ist, der strömungstechnisch direkt über einen Kanal (82) mit der zentralen Mischkammer (18) verbunden ist.

13. Ventilknoten nach einem der vorhergehenden Ansprüche, **dadurch gekennzeichnet, dass** die Öffnungen (22, 24, 26, 42, 44, 46, 62, 64, 66) eines Ventilanschlusses (20, 40) in Richtung der Längsachse (V) hintereinander angeordnet sind.

14. Ventilknoten nach einem der vorhergehenden Ansprüche, **dadurch gekennzeichnet, dass** die Öffnungen (22, 24, 26, 42, 44, 46, 62. 64, 66) eines Ventilanschlusses (20, 40, 60) in Richtung der Längsachse (V) nebeneinander angeordnet sind.

## Claims

1. A valve assembly (84) comprising
a valve manifold (10) which includes a housing having a central mixing chamber (18) and a shell surface (15),
and at least two diaphragm valves (86, 88, 90) which are each adapted to be attached to a valve port (20, 40, 60) provided on the shell surface (15),
wherein a first valve port (20) has three openings (22, 24, 26),
and the further valve ports (40, 60) each have at least two openings (42, 44, 46, 62, 64, 66),
a respective first opening (22, 42, 62) of the valve ports (20, 40, 60) being in direct fluid communication with the central mixing chamber (18) and the second and third openings (24, 26, 44, 46, 64, 66) of the valve ports (20, 40, 60) being each in fluid communication with an inflow or outflow (34, 38, 54, 58, 74, 78) via a duct (32, 36, 52, 56, 72, 76),
each valve (86, 88, 90) including inlets or outlets which correspond with the openings (22, 24, 26, 42, 44, 46, 62, 64, 66) of the valve ports (20, 40, 60) and are each in fluid communication with an opening (22, 24, 26, 42, 44, 46, 62, 64, 66),
each valve (86, 88, 90) being adapted to shut or open the flow path between the first opening (22, 42, 62) of a valve port (20, 40, 60) and the second or third opening (24, 26, 44, 46, 64, 66),
**characterized in that** the ducts (32, 36, 52, 56) and the bottom (59) of the central mixing chamber (18) have a constant slope or a slope that constantly increases towards the respective valve port (20, 40) without any valleys in which residual liquids may collect, so that when the valves (86, 88, 90) are fully open, the valve manifold is self-emptying.

2. The valve assembly according to claim 1, **characterized in that** the second valve port (40) and/or the third valve port (60) have three openings (24, 26, 44, 46, 64, 66).

3. The valve assembly according to claim 1 or 2, **characterized in that** the shell surface (15) of the valve manifold (10) has at least two side faces (12, 14, 16) each having a respective valve port provided thereon.

4. The valve assembly according to any of the preceding claims, **characterized in that** the side faces (12, 14, 16) are arranged evenly distributed on the periphery of the shell surface (15).

5. The valve assembly according to any of the preceding claims, **characterized in that** two side faces (12, 14) are provided which are located opposite each other in the peripheral direction.

6. The valve assembly according to any of the preceding claims, **characterized in that** the valve ports (20, 40, 60) are arranged to be offset in the direction of a longitudinal axis (V) of the housing.

7. The valve assembly according to claim 6, **characterized in that** in relation to a plane arranged perpendicularly to a longitudinal axis (V) of the housing, the bottom (59) of the central mixing chamber (18) has a slope towards a first opening of a first valve port.

8. The valve assembly according to any of the preceding claims, **characterized in that** at least one opening of the first valve port is in fluid communication with an outflow.

9. The valve assembly according to claim 8, **characterized in that** the opening (26) of the first valve port (20) connected with the outflow (38) is arranged at a lower point on the valve port (20) than the lowest point of the mixing chamber (18).

10. The valve assembly according to any of the preceding claims, **characterized in that** in relation to a plane arranged perpendicularly to a longitudinal axis (V) of the housing, the ducts (36, 56, 76) which are in fluid communication with an outflow (38, 58, 78) have a slope from the respective valve port (20, 40, 60) to the outflow (38, 58, 78).

11. The valve assembly according to any of the preceding claims, **characterized in that** in relation to a plane arranged perpendicularly to a longitudinal axis (V) of the housing, the ducts (32, 52, 72) which are in fluid communication with an inflow (34, 54, 74) have a slope from the inflow (34, 54, 74) to the respective opening (24, 44, 64) of the valve ports (20, 40, 60).

12. The valve assembly according to any of the preceding claims, **characterized in that** an external port (80) is provided which is in direct fluid communication with the central mixing chamber (18) via a duct (82).

13. The valve manifold according to any of the preceding claims, **characterized in that** the openings (22, 24, 26, 42, 44, 46, 62, 64, 66) of a valve port (20, 40) are arranged one behind the other in the direction of the longitudinal axis (V).

14. The valve manifold according to any of the preceding claims, **characterized in that** the openings (22, 24, 26, 42, 44, 46, 62, 64, 66) of a valve port (20, 40, 60) are arranged side by side in the direction of the longitudinal axis (V).

## Revendications

1. Ensemble de soupapes (84),
comportant un noeud de soupape (10) qui présente un boîtier avec une chambre de mélange centrale (18) et une surface enveloppante (15),
et comportant au moins deux soupapes à diaphragme (86, 88, 90) qui sont chacune aptes à être fixées sur un raccordement de soupape (20, 40, 60) prévu sur la surface enveloppante (15),
un premier raccordement de soupape (20) présentant trois ouvertures (22, 24, 26),
et les autres raccordements de soupape (40, 60) présentant au moins deux ouvertures (42, 44, 46, 62, 64, 66),
une première ouverture (22, 42, 62) respective des raccordements de soupape (20, 40, 60) étant, du point de vue écoulement, directement reliée à la chambre de mélange centrale (18), et la deuxième et troisième ouverture (24, 26, 44, 46, 64, 66) des raccordements de soupape (20, 40, 60) étant, du point de vue écoulement, chacune reliées à une amenée ou une évacuation (34, 38, 54, 58, 74, 78) par un canal (32, 36, 52, 56, 72, 76),
chaque soupape (86, 88, 90) présentant des entrées ou des sorties qui correspondent aux ouvertures (22, 24, 26, 42, 44, 46, 62, 64, 66) des raccordements de soupape (20, 40, 60) et qui, du point de vue écoulement, sont chacune reliées à une ouverture (22, 24, 26, 42, 44, 46, 62, 64, 66),
chaque soupape (86, 88, 90) étant apte à bloquer ou à ouvrir le passage d'écoulement entre la première ouverture (22, 42, 62) d'un raccordement de soupape (20, 40, 60) et la deuxième ou la troisième ouverture (24, 26, 44, 46, 64, 66),
**caractérisé en ce que** les canaux (32, 36, 52, 56) et le fond (59) de la chambre de mélange centrale (18) présentent une pente constante ou une pente augmentant de manière constante vers le raccordement de soupape respectif (20, 40), sans dépressions dans lesquelles des restes de liquide pourraient s'accumuler, de sorte que le noeud de soupape se vide automatiquement lorsque les soupapes (86, 88, 90) sont entièrement ouvertes.

2. Ensemble de soupapes selon la revendication 1, **caractérisé en ce que** le deuxième raccordement de soupape (40) et/ou le troisième raccordement de soupape (60) présente trois ouvertures (24, 26, 44, 46, 64, 66).

3. Ensemble de soupapes selon la revendication 1 ou 2, **caractérisé en ce que** la surface enveloppante (15) du noeud de soupape (10) présente au moins deux faces latérales (12, 14, 16) sur chacune desquelles il est prévu un raccordement de soupape.

4. Ensemble de soupapes selon l'une des revendications précédentes, **caractérisé en ce que** les faces latérales (12, 14, 16) sont agencées de manière à être régulièrement réparties sur la périphérie de la surface enveloppante (15).

5. Ensemble de soupapes selon l'une des revendications précédentes, **caractérisé en ce qu'**il est prévu deux faces latérales (12, 14) qui sont opposées l'une à l'autre dans le sens périphérique.

6. Ensemble de soupapes selon l'une des revendications précédentes, **caractérisé en ce que** les raccordements de soupape (20, 40, 60) sont agencés en déport dans le sens d'un axe longitudinal (V) du boîtier.

7. Ensemble de soupapes selon la revendication 6, **caractérisé en ce que** le fond (59) de la chambre de mélange centrale (18) présente par rapport à un plan agencé perpendiculairement à un axe longitudinal (V) du boîtier une pente vers une première ouverture d'un premier raccordement de soupape.

8. Ensemble de soupapes selon l'une des revendications précédentes, **caractérisé en ce qu'**au moins une ouverture du premier raccordement de soupape est reliée à une évacuation du point de vue écoulement.

9. Ensemble de soupapes selon la revendication 8, **caractérisé en ce que** l'ouverture (26) du premier raccordement de soupape (20) qui est reliée à l'évacuation (38) est agencée plus bas sur le raccordement de soupape (20) que le point le plus bas de la chambre de mélange (18).

10. Ensemble de soupapes selon l'une des revendications précédentes, **caractérisé en ce que** les canaux (36, 56, 76) qui sont en communication avec une évacuation (38, 58, 78) du point de vue écoulement présentent par rapport à un plan agencé perpendiculairement à un axe longitudinal (V) du boîtier une pente du raccordement de soupape (20, 40, 60) respectif vers l'évacuation (38, 58, 78).

11. Ensemble de soupapes selon l'une des revendications précédentes, **caractérisé en ce que** les canaux (32, 52, 72) qui sont en communication avec une amenée (34, 54, 74) du point de vue écoulement présentent par rapport à un plan agencé perpendiculairement à un axe longitudinal (V) du boîtier une pente de l'amenée (34, 54, 74) vers l'ouverture respective (24, 44, 64) des raccordements de soupape (20, 40, 60).

12. Ensemble de soupapes selon l'une des revendications précédentes, **caractérisé en ce qu'**il est prévu un raccordement extérieur (80) qui, du point de vue écoulement, est directement relié à la chambre de mélange centrale (18) par un canal (82).

13. Noeud de soupape selon l'une des revendications précédentes, **caractérisé en ce que** les ouvertures (22, 24, 26, 42, 44, 46, 62, 64, 66) d'un raccordement de soupape (20, 40) sont agencées les unes derrières les autres dans le sens de l'axe longitudinal (V).

14. Noeud de soupape selon l'une des revendications précédentes, **caractérisé en ce que** les ouvertures (22, 24, 26, 42, 44, 46, 62, 64, 66) d'un raccordement de soupape (20, 40, 60) sont agencées les unes à côté des autres dans le sens de l'axe longitudinal (V).
